# EUROPÄISCHE PATENTSCHRIFT

(11) **EP 1 179 458 B1**
(45) Veröffentlichungstag und Bekanntmachung des Hinweises auf die Patenterteilung: **30.05.2007**
(21) Anmeldenummer: 01118717.6
(22) Anmeldetag: 03.08.2001
(51) Int. Cl.: B60R 21/34

(54) **Antrieb einer an einem Fahrzeug vorgesehenen Klappe und Fussgängerschutz an einem Kraftfahrzeug**
Actuator for a lid and pedestrian protection system for vehicles
Dispositif pour véhicule, de déplacement du capot et de protection de piétons

(30) Priorität: 08.08.2000 DE 20013909 U; 12.04.2001 DE 20106478 U
(43) Veröffentlichungstag der Anmeldung: 13.02.2002
(73) Patentinhaber: TRW Automotive Electronics & Components GmbH & Co. KG, 78315 Radolfzell (DE)
(72) Erfinder: Peter, Cornelius, 77815 Bühl (DE)
(74) Vertreter: Kitzhofer, Thomas

(56) Entgegenhaltungen:
- FR-A- 2 783 860
- US-A- 6 092 336

## Beschreibung

Die Erfindung betrifft einen Antrieb einer an einem Fahrzeug vorgesehenen Klappe, worunter eine Fahrzeugtür, eine Kofferraum- oder Tankdeckelklappe und insbesondere eine Motorhaube fält. Ein Antrieb nach dem Oberbegriff des Anspruch 1 ist aus FR 2 783 860 bekannt.

Darüber hinaus betrifft die Erfindung einen Fußgängerschutz an einem Kraftfahrzeug mit einem erfindungsgemäßen Antrieb.

Der Fußgängerschutz an Kraftfahrzeugen soll verbessert werden, indem die Motorhaube nachgiebiger ausgebildet wird. Hierzu sind beispielsweise Gassäcke für Fußgänger angedacht worden oder eine nachgiebige Lagerung der Motorhaube.

Die Erfindung schafft einen sehr einfachen und wirksamen Antrieb, der z.B. bei einem Fußgängerschutz, der die Motorhaube umfaßt, verwendet werden kann. Der erfindungsgemäße Antrieb ist dabei so ausgebildet, daß er die Motorhaube, wenn ein Fußgänger durch einen Unfallsensor detektiert wird, ein gewisses Maß anhebt. Die Motorhaube ist um dieses Maß federnd nachgiebig gelagert, so daß der Aufprall für den Fußgänger weniger hart ist. Der Antrieb ist in der Lage, schlagartig innerhalb weniger Millisekunden die Motorhaube anzuheben. Er ist darüber hinaus in der Lage, mehrfach ohne Werkstattaufenthalt erneut zum selben Zweck betätigt zu werden, was den Hintergrund hat, daß die Unfallsensoren nicht immer zweifelsfrei einen Unfall mit einem Fußgänger detektieren, sondern z.B. auch mit Gegenständen, beispielsweise einem Karton, die bei Kollision mit dem Fahrzeug keinen Schaden verursachen. Eine pyrotechnische Antriebsvorrichtung müßte nach einem eigentlich nicht notwendigen Antriebsvorgang kostspielig ausgetauscht werden, was die Umsetzung eines Fußgängerschutzes in die Praxis nicht möglich machen würde.

Der erfindungsgemäße Antrieb, der ebenso als Antrieb in Form z.B. einer Schließhilfe für eine Fahrzeugtür oder eine andere Klappe benutzt werden kann, zeichnet sich durch einen einfachen Aufbau aus und weist einen Elektromotor, eine Betätigungswelle, die mit der Klappe verbunden ist, ein Übersetzungsgetriebe, durch das der Rotor (Läufer) des Elektromotors an die Betätigungswelle angekoppelt ist, und einen Kraftspeicher auf. Der Kraftspeicher kann die Betätigungswelle unabhängig vom Elektromotor antreiben. Das Untersetzungsgetriebe ist so ausgebildet, daß die Betätigungswelle nur in einer Drehrichtung vom Kraftspeicher schlagartig angetrieben wird und der Elektromotor die Betätigungswelle in der Gegendrehrichtung antreibt und dabei dem Kraftspeicher die Energie zuführt, die zum Antrieb der Betätigungswelle in Drehrichtung notwendig ist.

Der Kraftspeicher bewegt die Klappe, insbesondere die Motorhaube schlagartig aus einer Grundstellung in die gewünschte angehobene Stellung, und der Elektromotor bewegt gegen den Widerstand des Kraftspeichers die Klappe wieder zurück in die Grund- oder Ausgangsstellung, um dabei den Kraftspeicher wieder "scharf' zu machen.

Der Kraftspeicher ist gemäß einer Ausführungsform fest mit der Betätigungswelle gekoppelt. Das bedeutet, daß keine komplizierten Kupplungsmechanismen zwischen Betätigungswelle und Kraftspeicher und/oder Elektromotor vorgesehen sind.

Das Untersetzungsgetriebe ist gemäß der bevorzugten Ausführungsform so ausgebildet, daß es in eine Freigabestellung gebracht werden kann, in der die im Kraftspeicher enthaltene Energie schlagartig zum Antrieb der Betätigungswelle freigegeben wird. Das bedeutet, der Elektromotor hat mehrere Funktionen. Einerseits verschiebt er die Klappe in die Ausgangsstellung zurück und andererseits gibt er selbst den Kraftspeicher frei, indem er das Untersetzungsgetriebe in die Freigabestellung bewegt. Damit dies innerhalb kürzester Zeit möglich ist, müssen Elektromotor und Getriebe möglichst trägheitsarm bzw. verlustarm ausgebildet sein. Der Elektromotor ist zu diesem Zweck ein bürstenloser Innenläufer, der für Schmutzablagerungen wenig anfällig ist und eine geringe träge Masse der bewegten Teile aufweist.

Das Untersetzungsgetriebe hat vorzugsweise ein Zahnrad, das auf einem Teil seines Umfangs keine Zähne aufweist. Sobald der zahnfreie Bereich gegenüberliegend zum Gegenzahnrad gedreht ist, was durch den Elektromotor geschieht, ist die Freigabestellung erreicht, und das Gegenzahnrad kann sich frei drehen, indem der Kraftspeicher aktiviert wird. In der Freigabestellung ist der Elektromotor dann von der Betätigungswelle entkoppelt.

Außerhalb der Freigabestellung sind Kraftspeicher und Rotor des Elektromotors mechanisch starr miteinander über das Untersetzungsgetriebe gekoppelt.

Der erfindungsgemäße Fußgängerschutz weist eine Motorhaube und wenigstens einen erfindungsgemäßen Antrieb zum Bewegen der Motorhaube auf, wobei der Kraftspeicher bei einem Unfall die Motorhaube aus einer Grundstellung in eine angehobene Stellung bewegt und federnd nachgiebig in der angebobenen Stellung hält. Der Elektromotor fährt dann die Motorhaube wieder in die Grundstellung zurück. Das bedeutet, daß der Kraftspeicher ebenfalls eine Doppelfunktion hat, indem er einerseits die Motorhaube anhebt und andererseits für die nachgiebige Lagerung der Motorhaube in der angehobenen Stellung sorgt, so daß der Aufprall des Fußgängers auf die Motorhaube weniger hart ist. Bevorzugterweise ist der Kraftspeicher ein Federkraftspeicher, insbesondere ein Federkraftspeicher mit einer Spiralfeder.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Ansicht eines Fußgängerschutzes gemäß der Erfindung mit zwei erfindungsgemäßen Antrieben,
- Figur 2 eine Außenansicht des erfindungsgemäßen Antriebs bei geschlossener Haube,
- Figur 3 eine Außenansicht des Antriebs bei angehobener Haube,
- Figur 4 eine Ansicht des Antriebs ohne Deckel,
- Figur 5 eine Explosionsansicht des Antriebs nach der Erfindung,
- Figur 6 eine Seitenansicht des Antriebs, wobei nur die bewegten Teile dargestellt sind,

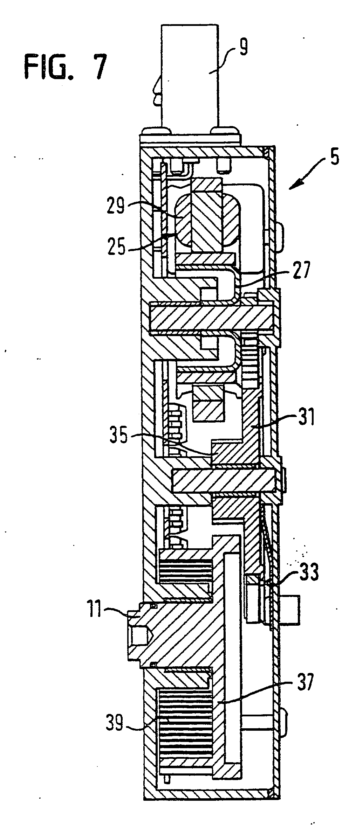

- Figur 7 eine Schnittansicht durch den Antrieb längs der Schnittlinie VII-VII in Figur 5, und
- Figur 8 eine vergrößerte Ansicht des Hohlrades und des Stirnrades.

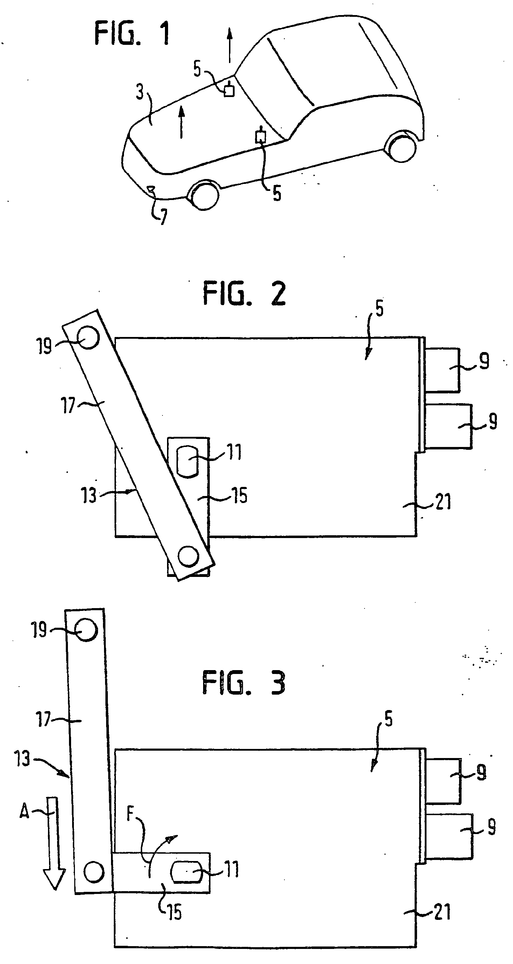

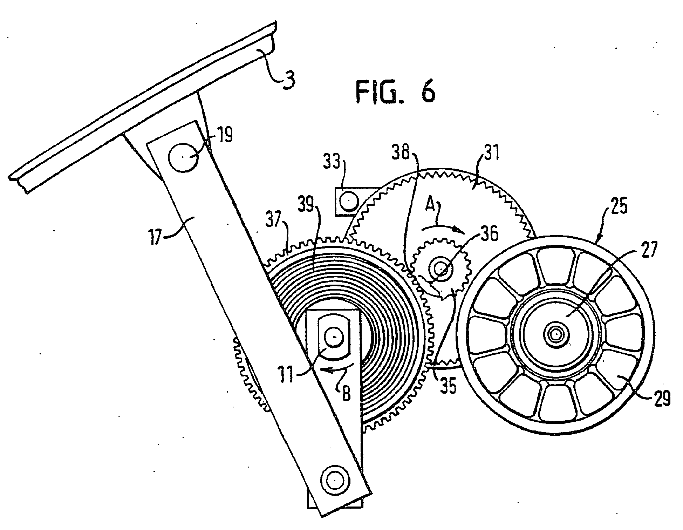

In Figur 1 ist ein Fußgängerschutz an einem Kraftfahrzeug dargestellt, der eine Motorhaube 3 und zwei Antriebe 5 aufweist, die die Motorhaube 3 anheben, sobald Sensoren 7 einen Fußgänger detektieren, der vom Fahrzeug erfaßt wird. Die Antriebe 5 sind gleich ausgebildet und jeweils am hinteren äußeren Ende der Motorhaube 3 vorgesehen. Es wird auch auf Figur 6 verwiesen, aus der die Anbindung des hinteren Endes der Motorhaube 3 an die bewegten Teile des Antriebs 5 deutlich hervorgeht. Alternativ könnte zusätzlich am vorderen Ende noch ein Antrieb vorgesehen sein, der dann aber für einen geringeren Hub sorgt als die hinteren. Die Antriebe 5 können die Motorhaube 3 nicht nur schlagartig anheben, sondern die Motorhaube auch in dieser angehobenen Stellung federnd nachgiebig lagern, d.h. die Antriebe selbst stellen eine federnde Lagerung dar, die einer Krafteinwirkung von außen, die bestrebt ist, die Motorhaube in die Grundstellung zu bringen, einen gewissen Widerstand entgegensetzt.

In Figur 2 ist einer der Antriebe 5 dargestellt, welcher sehr kompakt ausgebildet ist. Der Antrieb hat ein Außengehäuse 21, aus dem wenigstens vier elektrische Anschlüsse 9 herausragen sowie eine Betätigungswelle 11, die mit einem Hebelmechanismus 13 verbunden ist, welcher aus Hebeln 15 und 17 besteht. Ein Anlenkpunkt 19 dient der Koppelung an die Haube. Im Bereich dieses Anlenkpunktes kann die Haube von dem Hebelmechanismus entkoppelt werden, um die Motorhaube zu öffnen. In Figur 2 ist der Antrieb gezeigt, wenn sich die Motorhaube 3 in der Grundstellung befindet. Der Antrieb 5 kann bei einem Unfall mit einem Fußgänger schlagartig, innerhalb von 60 bis 70 Millisekunden, den Hebel 15 um 90° in Uhrzeigerrichtung drehen und damit den Anlenkpunkt um ca. 55 mm anheben. In der in Figur 3 gezeigten angehobenen Stellung (auch Halteposition genannt) wirkt der Antrieb federelastisch, d.h. bei einem Kontakt des Fußgängers mit der Motorhaube wird diese federelastisch nach unten in Pfeilrichtung A gegen die Kraft F des Antriebs gedrückt.

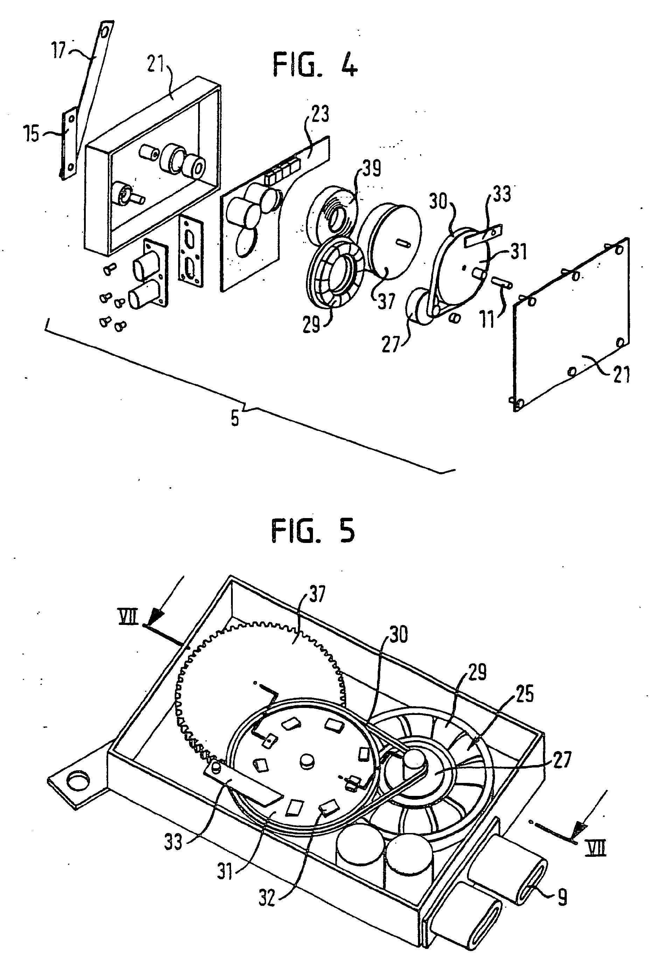

Der Antrieb ist in Figur 4 detaillierter dargestellt, er weist ein Gehäuse 21, eine Elektronik 23 sowie einen kollektorlosen, als Innenläufer ausgebildeten Gleichstrommotor auf, der in Figur 5 auch noch zu sehen ist und mit dem Bezugszeichen 25 versehen ist. In Figur 4 sind Rotor (Läufer) 27 und Stator 29 dargestellt. Der Rotor 27 ist über ein zweistufiges Untersetzungsgetriebe mit der Betätigungswelle 11 gekoppelt. Eine erste Stufe des Getriebes ist ein Zahnriemengetriebe, wobei der Zahnriemen 30 mit einer Rotorwelle und einem großen Zahnrad 31 gekoppelt ist, welches an einer Stirnseite keilförmige Erhebungen 32 hat, die mit einer Blattfeder, die als Rücklaufsperre 33 wirkt, zusammenarbeiten, so daß das Zahnrad 31 nur in einer Richtung (in Figur 5 entgegen dem Uhrzeigersinn) gedreht werden kann. Das Zahnrad 31 besitzt rückseitig, wie Figur 6 zeigt, ein kleines, angeformtes Stirnrad 35, das an seinen Außenumfang nicht vollständig von Zähnen umgeben ist, sondern einen zahnlosen Umfangsabschnitt 36 aufweist. Ein Gegenzahnrad, welches als topfförmiges Hohlrad 37 ausgebildet ist, kann mit dem Stirnrad 35 zur Bildung der zweiten Stufe des Getriebes kämmen. Im Inneren des Hohlrades 37 ist ein Kraftspeicher in Form eines Federspeichers 39 untergebracht. Das radial innere Ende des Federspeichers 39 ist mit der Betätigungswelle 11 gekoppelt, das radial äußere mit dem Gehäuse 21. Das Hohlrad 37 ist ebenfalls mit der Betätigungswelle 11 drehfest gekoppelt.

In Figur 6 ist der Antrieb in der Grundstellung dargestellt. In dieser Stellung ist der erste Zahn 38 am Umfang und im Uhrzeigersinn nach dem zahnlosen Bereich 36 am Stirnrad 35 gerade noch in Eingriff mit dem Zahnrad 37, so daß die Betätigungswelle 11 über das Hohlrad 37, das Stirnrad 35, das Zahnrad 31 und den Zahnriemen 30 mechanisch fest mit dem Rotor 27 gekoppelt ist. Die Feder im Federspeicher 39 ist gespannt und bestrebt, die Betätigungswelle 11 im Uhrzeigersinn (Pfeil B) anzutreiben. Dieser Antrieb ist aber in der gezeigten Getriebestellung nicht möglich, da die Rücklaufsperre 33 wirkt, so daß keine Gefahr besteht, daß im normalen Fahrbetrieb die Motorhaube durch den Kraftspeicher nach oben bewegt wird.

Sobald ein Fußgänger detektiert wird, der laut einer Fahrzeugsteuerung (nicht gezeigt) mit dem Fahrzeug kollidiert, wird der Elektromotor 25 angesteuert, so daß sich der Rotor 27 innerhalb weniger Millisekunden bewegt und dabei das Zahnrad 31 samt angeformtem Stirnrad 35 in Richtung des Pfeiles A bewegt. Die Feder wird noch minimal weitergespannt, bis schließlich der zuvor erwähnte erste Zahn auf dem Stirnrad außer Eingriff mit der Gegenverzahnung auf dem Gegenzahnrad in Form eines Hohlrads 37 kommt, so daß kein Eingriff der beiden Zahnräder 35, 37 mehr gegeben ist und das Untersetzungsgetriebe in eine Freigabestellung gelangt. In dieser Stellung ist der Rotor von der Betätigungswelle 11 entkoppelt, und der Federspeicher 39 kann schlagartig seine Energie freigeben und die Betätigungswelle 11 in Pfeilrichtung B antreiben und somit die Motorhaube anheben. Der Pfeil B zeigt also die Drehrichtung, in der die Betätigungswelle 11 nur vom Kraftspeicher angetrieben wird.

In der angehobenen Stellung kann entgegen der Kraft der Feder die Motorhaube nach unten gedrückt werden.

Nach erfolgter Auslösung wird die Motorhaube selbttätig nach unten gefahren, indem der Rotor 27 in der gleichen Drehrichtung wie zuvor zur Erreichung der Freigabestellung gedreht wird, so daß schließlich wieder ein Zahn des Stirnrads 35 mit dem Hohlrad 37 in Eingriff kommt. Jetzt ist der Rotor 27 wieder fest mit der Betätigungswelle 11 gekoppelt und kann diese entgegen der Richtung des Pfeiles B (Gegendrehrichtung) drehen. Bei diesem Zurückstellen bis in die in Figur 6 gezeigte Stellung wird die Feder erneut gespannt, um später eventuell erneut freigegeben zu werden.

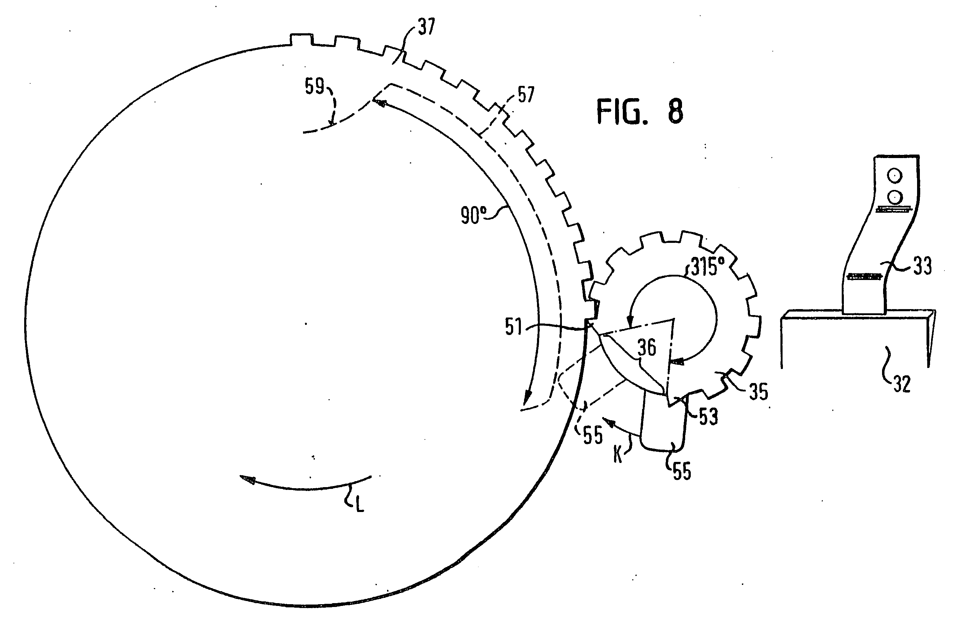

In Figur 8 sind noch einige, bislang nicht erwähnte Details zu erkennen, die insbesondere beim Freigeben der Federenergie vorteilhaft sind.

Die Zähne des Stirnrads 35 und des Hohlrads 37 sind nahezu rechteckig, um die Tragkraft der Verzahnungen zu erhöhen. Die Zähne selbst sind nur etwa 0,7 mm tief, von denen etwa nur 0,5 mm in Eingriff sind, um den Auslösewinkel und damit die Auslösezeit auf ein Minimum zu reduzieren. Aus der in Figur 8 gezeigten Grundstellung bedarf es nur einer Drehung um etwa 20° am Stirnrad 35, d.h. 120° am Motor, um die Verzahnungen von Stirnrad 35 und Hohlrad 37 außer Eingriff zu bringen und die Federenergie freizugeben.

Die sogenannte Freilaufstellung, also die Stellung, in der sich das Stirnrad 35 bei angehobener Motorhaube 3 befindet, ist etwa um 50° im Uhrzeigersinn gegenüber der in Figur 8 gezeigten Grundstellung gedreht.

Die sogenannte Startstellung, also die Stellung des Stirnrads 35, ab der wieder ein Zahn 53 des Stirnrads 35 in Eingriff mit der Verzahnung des Hohlrads 37 kommt, liegt etwa bei 75° Drehung im Uhrzeigersinn zu der in Figur 8 gezeigten Grundstellung.

Nach 360° Drehung des Stirnrads 35 ist wieder die Grundstellung erreicht.

Ein weiteres erwähnenswertes Detail besteht darin, daß der erste und der letzte sich in Eingriff befindende Zahn 51, 53, also die beiden den zahnlosen Umfangsabschnitt 36 begrenzenden Zähne, eine stark abgeschrägte rückseitige Zahnflanke haben. Damit soll eine Kollision mit den Zähnen des Hohlrads 37 weitgehend vermieden werden. Der zahnlose Umfangsabschnitt 36 erstreckt sich in etwa über einen Winkel von 45°.

Zwischen Stirnrad 35 und Zahnrad 31 ist ein fingerartiger, vorspringender Anschlag 55 drehfest mit den Zahnrädern 31, 35 verbunden. Der Anschlag 55 dient der Lagefixierung des Stirnrads 35 in der sogenannten Freilaufstellung, wenn also die Verzahnungen von Stirnrad 35 und Hohlrad 37 nicht miteinander in Eingriff kommen. Der Anschlag soll erreichen, daß das Stirnrad 35 und das Hohlrad 37 zueinander in der Freilaufstellung verharren, bis sich der Abtrieb, also die Betätigungswelle 11 um 90° gedreht hat. Das Hohlrad 37 hat hierzu auf einer Stirnseite einen Absatz in Form eines Kreiszylindersegmentes. Dieser Absatz ist mit 57 bezeichnet. Der Absatz endet nach etwa 90° in einer Vertiefung 59. Wird das Stirnrad 35 zusammen mit dem Anschlag 55 um etwa 50° im Uhrzeigersinn gedreht, so daß der Anschlag 55 in der mit unterbrochenen Linien dargestellten Stellung ist, schlägt er an den Absatz 57 an. Das Stirnrad 35 kann nicht weiter drehen und befindet sich in der Freilaufstellung. Das Hohlrad 37 wird in Richtung des Pfeiles L angetrieben. Sobald die Vertiefung 59 zum Anschlag 55 gedreht ist, kann dieser an Absatz 57 vorbei schwenken, und das Stirnrad 35 kann sich weiter drehen.

Alle gezeigten Zahnräder können ohne weiteres auch aus Kunststoff ausgeführt sein, um eine Schmierung der Verzahnungen zu vermeiden und die Herstellungskosten zu reduzieren.

Die gezeigte Mimik kann auch bei einer Fahrzeugtür oder bei einer Motorhaube angewandt werden, um als Schließhilfe zu dienen, wobei bei dieser Ausführungsform noch eine Hebelmimik vorgesehen sein sollte, um bei stromlosem Elektromotor nach der Freigabestellung das Stirnrad 35 wieder in Eingriff mit dem Hohlrad 37 zu bringen, damit die Rücklaufsperre wirkt. Alternativ kann auch ein Energiepuffer, z.B. die Batterie oder eine Zusatzbatterie vorgesehen sein, die nach der Freigabestellung das Stirnrad 35 wieder in Eingriff mit dem Hohlrad 37 bringt.

Der Elektromotor ist ein bürstenloser, hochdynamischer Gleichstrommotor.

## Patentansprüche

1. Antrieb einer an einem Fahrzeug vorgesehenen Klappe, insbesondere einer Motorhaube (3), mit
einem Elektromotor,
einer Betätigungswelle (11), die mit der Klappe verbunden ist,
einem Untersetzungsgetriebe, durch das der Rotor (27) des Elektromotors an die Betätigungswelle (11) angekoppelt ist,
einem Kraftspeicher, **dadurch gekennzeichnet, daß** durch den Kraftspeicher die Betätigungswelle (11) unabhängig vom Elektromotor antreibbar ist, und daß
das Untersetzungsgetriebe so ausgebildet ist, daß die Betätigungswelle (11) in einer Drehrichtung (B) nur vom Kraftspeicher angetrieben wird und der Elektromotor die Betätigungswelle (11) in der Gegendrehrichtung (A) antreibt und dabei dem Kraftspeicher die Energie zuführt, die zum Antrieb der Betätigungswelle (11) in Drehrichtung notwendig ist.

2. Antrieb nach Anspruch 1, **dadurch gekennzeichnet, daß** der Kraftspeicher fest mit der Betätigungswelle (11) gekoppelt ist.

3. Antrieb nach Anspruch 1 oder 2, **dadurch gekennzeichnet, daß** das Untersetzungsgetriebe durch den Elektromotor in eine Freigabestellung gebracht werden kann, in der die im Kraftspeicher enthaltene Energie schlagartig zum Antrieb der Betätigungswelle (11) freigegeben wird.

4. Antrieb nach Anspruch 3, **dadurch gekennzeichnet, daß** in der Freigabestellung der Kraftspeicher vom Elektromotor entkoppelt ist.

5. Antrieb nach Anspruch 4, **dadurch gekennzeichnet, daß** das Untersetzungsgetriebe ein Zahnrad (35) hat, welches auf einem Teil seines Umfangs keine Zähne aufweist, und sobald der zahnfreie Bereich gegenüberliegend zum Gegenzahnrad (37) gedreht ist, die Freigabestellung erreicht ist.

6. Antrieb nach Anspruch 5, **dadurch gekennzeichnet, daß** ein mechanischer Anschlag (55) zwischen Zahnrad (35) und Gegenzahnrad (37) vorgesehen ist, der nach Erreichen der Freigabestellung eine weitere Drehung des Zahnrads (35) verhindert und das Zahnrad (35) in der Freigabestellung hält.

7. Antrieb nach Anspruch 6, **dadurch gekennzeichnet, daß** der Anschlag nach einem vorbestimmten Drehwinkel des Gegenzahnrads (37) freigegeben ist, damit Zahnrad (35) und Gegenzahnrad (37) wieder miteinander kämmen und dem Kraftspeicher wieder Energie zugeführt werden kann.

8. Antrieb nach einem der Ansprüche 5 bis 7, **dadurch gekennzeichnet, daß** im Untersetzungsgetriebe eine mechanische Rücklaufsperre (33) vorgesehen ist, die außerhalb der Freigabestellung einer vom Kraftspeicher verursachten Drehung des Zahnrads (35) in die Freigabestellung entgegenwirkt.

9. Antrieb nach einem der Ansprüche 3 bis 8, **dadurch gekennzeichnet, daß** außerhalb der Freigabestellung Kraftspeicher und Rotor (27) des Elektromotors mechanisch starr miteinander gekoppelt sind.

10. Antrieb nach einem der Ansprüche 3 bis 9, **dadurch gekennzeichnet, daß** das Untersetzungsgetriebe so ausgebildet ist, daß zum Antrieb der Betätigungswelle (11) in Gegendrehrichtung und zum Bewegen des Untersetzungsgetriebes in die Freigabestellung der Motor in derselben Richtung dreht.

11. Antrieb nach einem der vorhergehenden Ansprüche, **dadurch gekennzeichnet, daß** er samt Kraftspeicher so ausgebildet ist, daß der Kraftspeicher nach erfolgtem Antrieb in Drehrichtung federnd nachgiebig gegen eine von außen ausgeübte Kraft wirkt, die bestrebt ist, eine Bewegung in Gegendrehrichtung hervorzurufen.

12. Antrieb nach Anspruch 11, **dadurch gekennzeichnet, daß** der Kraftspeicher ein Federspeicher (39), insbesondere mit einer Spiralfeder, ist.

13. Antrieb nach einem der vorhergehenden Ansprüche, **dadurch gekennzeichnet, daß** der Elektromotor bürstenlos ausgebildet ist.

14. Antrieb nach einem der vorhergehenden Ansprüche, **dadurch gekennzeichnet, daß** der Elektromotor als Innenläufer ausgebildet ist.

15. Antrieb nach einem der vorhergehenden Ansprüche, **dadurch gekennzeichnet, daß** an der Betätigungswelle (11) abtriebsseitig ein Hebelmechanismus angekoppelt ist zur Befestigung an der Klappe.

16. Fußgängerschutz an einem Kraftfahrzeug, mit
einer Motorhaube (3) und
wenigstens einem Antrieb nach einem der vorhergehenden Ansprüche zum Anheben der Motorhaube (3), wobei
der Kraftspeicher bei einem Unfall die Motorhaube aus einer Grundstellung in eine angehobene Stellung anhebt und federnd nachgiebig in der angehobenen Stellung hält und wobei der Elektromotor die Motorhaube in die Grundstellung zurückfahren kann.

17. Fußgängerschutz nach Anspruch 16, **dadurch gekennzeichnet, daß** der Elektromotor zur Freigabe der im Kraftspeicher gespeicherten Energie aktiviert wird.

18. Fußgängerschutz nach Anspruch 16 oder 17, **dadurch gekennzeichnet, daß** am hinteren Ende wenigstens ein Antrieb vorgesehen ist.

## Claims

1. A drive for a flap provided on a vehicle, especially an engine hood (3), comprising
an electric motor,
an actuation shaft (11) that is connected to the flap,
a reduction gear by means of which the rotor (27) of the electric motor is coupled to the actuation shaft (11),
an energy accumulator, **characterized in that** by means of the energy accumulator the actuation shaft (11) can be driven independently of the electric motor, and that
the reduction gear is configured in such a way that the actuation shaft (11) is driven in one rotational direction (B) only by the energy accumulator and the electric motor drives the actuation shaft (11) in the opposite rotational direction (A), thereby supplying to the energy accumulator the energy that is needed to drive the actuation shaft (11) in the rotational direction.

2. The drive according to Claim 1, **characterized in that** the energy accumulator is firmly coupled with the actuation shaft (11).

3. The drive according to Claim 1 or 2, **characterized in that** the reduction gear can be moved by means of the electric motor into a release position in which the energy stored in the energy accumulator is abruptly released so as to drive the actuation shaft (11).

4. The drive according to Claim 3, **characterized in that**, in the release position, the energy accumulator is uncoupled from the electric motor.

5. The drive according to Claim 4, **characterized in that** the reduction gear has a toothed wheel (35) which has no teeth on part of its circumference, and as soon as the toothless area is rotated so as to be across from the toothed counterwheel (37), the release position is reached.

6. The drive according to Claim 5, **characterized in that**, between the toothed wheel (35) and the toothed counterwheel (37), there is provided a mechanical stop (55) which, after the release position has been reached, prevents a further rotation of the toothed wheel (35) and holds the toothed wheel (35) in the release position.

7. The drive according to Claim 6, **characterized in that** the stop is released after rotating the toothed counterwheel (37) by a predefined rotational angle, so that the toothed wheel (35) and the toothed counterwheel (37) will mesh with each other again and energy can be supplied to the energy accumulator again.

8. The drive according to any of Claims 5 to 7, **characterized in that**, in the reduction gear, there is provided a mechanical return stop (33) which outside of the release position counteracts a rotation, caused by the energy accumulator, of the toothed wheel (35) to the release position.

9. The drive according to any of Claims 3 to 8, **characterized in that** outside of the release position the energy accumulator and the rotor (27) of the electric motor are rigidly coupled to each other mechanically.

10. The drive according to any of Claims 3 to 9, **characterized in that** the reduction gear is configured in such a manner that the motor turns in the same direction for driving the actuation shaft (11) in the opposite rotational direction and for moving the reduction gear into the release position.

11. The drive according to any of the preceding claims, **characterized in that**, together with the energy accumulator, the drive is designed in such a way that the energy accumulator, after having effectuated the drive in the rotational direction, acts in a resiliently yielding manner against a force exerted from the outside, which strives to cause a movement in the opposite rotational direction.

12. The drive according to Claim 11, **characterized in that** the energy accumulator is a spring accumulator (39), especially with a spiral spring.

13. The drive according to any of the preceding claims, **characterized in that** the electric motor is of the brushless type.

14. The drive according to any of the preceding claims, **characterized in that** the electric motor is designed as an internal rotor.

15. The drive according to any of the preceding claims, **characterized in that** a lever mechanism is coupled to the output side of the actuation shaft (11) for attachment to the flap.

16. A pedestrian protection means on a motor vehicle, comprising
an engine hood (3) and
at least one drive according to any of the preceding claims for raising the engine hood (3),
the energy accumulator raising the engine hood in case of an accident out of an original position into a raised position and holding it in the raised position in a resiliently yielding manner, and the electric motor being able to move the engine hood back into the original position.

17. The pedestrian protection means according to Claim 16, **characterized in that** the electric motor is activated in order to release the energy stored in the energy accumulator.

18. The pedestrian protection means according to Claim 16 or 17, **characterized in that** at least one drive is provided on the rear end.

## Revendications

1. Entraînement d'un ouvrant prévu sur un véhicule, en particulier d'un capot moteur (3), comportant
un moteur électrique,
un arbre de commande (11) qui est relié à l'ouvrant,
un engrenage réducteur par lequel le rotor (27) du moteur électrique est couplé à l'arbre de commande (11),
un accumulateur d'énergie,
**caractérisé en ce que** grâce à l'accumulateur d'énergie, l'arbre de commande (11) peut être entraîné indépendamment du moteur électrique, et **en ce que**
l'engrenage réducteur est réalisé de telle sorte que l'arbre de commande (11) n'est entraîné que par l'accumulateur d'énergie dans un sens de rotation (B) et le moteur électrique entraîne l'arbre de commande (11) dans le sens de rotation inverse (A) et amène alors à l'accumulateur d'énergie l'énergie qui est nécessaire pour l'entraînement de l'arbre de commande (11) dans le sens de rotation.

2. Entraînement selon la revendication 1, **caractérisé en ce que** l'accumulateur d'énergie est couplé de manière solidaire avec l'arbre de commande (11).

3. Entraînement selon la revendication 1 ou 2, **caractérisé en ce que** l'engrenage réducteur peut être amené par le moteur électrique dans une position de libération dans laquelle l'énergie contenue dans l'accumulateur d'énergie est libérée brusquement pour l'entraînement de l'arbre de commande (11).

4. Entraînement selon la revendication 3, **caractérisé en ce que** dans la position de libération, l'accumulateur d'énergie est découplé du moteur électrique.

5. Entraînement selon la revendication 4, **caractérisé en ce que** l'engrenage réducteur est une roue dentée (35) qui ne présente pas de dents sur une partie de sa périphérie, et la position de libération est atteinte dès que la zone dépourvue de dents est tournée par rapport à la roue dentée opposée (37).

6. Entraînement selon la revendication 5, **caractérisé en ce qu'**il est prévu une butée (55) mécanique entre la roue dentée (35) et la roue dentée opposée (37), qui empêche une nouvelle rotation de la roue dentée (35) après avoir atteint la position de libération et qui maintient la roue dentée (35) dans la position de libération.

7. Entraînement selon la revendication 6, **caractérisé en ce que** la butée est libérée selon un angle de rotation prédéfini de la roue dentée opposée (37) afin que la roue dentée (35) et la roue dentée opposée (37) puissent s'engrener à nouveau et que de l'énergie puisse être amenée à nouveau à l'accumulateur d'énergie.

8. Entraînement selon l'une des revendications 5 à 7, **caractérisé en ce qu'**il est prévu dans l'engrenage réducteur un blocage de retour (33) qui, en dehors de la position de libération, s'oppose à une rotation de la roue dentée (35) dans la position de libération, laquelle est provoquée par l'accumulateur d'énergie.

9. Entraînement selon l'une des revendications 3 à 8, **caractérisé en ce qu'**en dehors de la position de libération, l'accumulateur d'énergie et le rotor (27) du moteur électrique sont mécaniquement couplés l'un à l'autre de façon rigide.

10. Entraînement selon l'une des revendications 3 à 9, **caractérisé en ce que** l'engrenage réducteur est réalisé de telle sorte que le moteur tourne dans le même sens pour l'entraînement de l'arbre de commande (11) dans le sens de rotation opposé et pour le déplacement de l'engrenage réducteur jusque dans la position de libération.

11. Entraînement selon l'une des revendications **caractérisé en ce qu'**il est réalisé avec de rotation opposé de telle sorte qu'une fois l'entraînement dans le sens de rotation effectué, l'accumulateur d'énergie agit de façon élastique et souple à l'encontre d'une force exercée depuis l'extérieur, qui a tendance a provoquer un mouvement dans le sens de rotation opposé.

12. Entraînement selon la revendication 12, **caractérisé en ce que** l'accumulateur d'énergie est un accumulateur à ressort (39), en particulier avec un ressort en spirale.

13. Entraînement selon l'une des revendications précédentes, **caractérisé en ce que** le moteur électrique est réalisé sans balai.

14. Entraînement selon l'une des revendications précédentes, **caractérisé en ce que** le moteur électrique est réalisé sous forme de rotor intérieur.

15. Entraînement selon l'une des revendications précédentes, **caractérisé en ce qu'**un mécanisme à levier est couplé côté sortie sur l'arbre de commande (11) pour la fixation sur l'ouvrant.

16. Dispositif de protection de piétons sur un véhicule automobile, comportant
un capot moteur (3) et
au moins un entraînement selon l'une des revendications précédentes, pour le soulèvement du capot moteur (3),
l'accumulateur d'énergie soulevant, lors d'un accident, le capot moteur depuis une position de base jusque dans une position relevée et le maintient de façon élastique et souple dans la position relevée et le moteur électrique pouvant ramener le capot moteur dans la position de base.

17. Dispositif de protection selon la revendication 16, **caractérisé en ce que** le moteur électrique est activé pour libérer l'énergie accumulée dans l'accumulateur d'énergie.

18. Dispositif de protection de piétons selon la revendication 16 ou 17, **caractérisé en ce qu'**au moins un entraînement est prévu sur l'extrémité arrière.
